# EUROPÄISCHE PATENTSCHRIFT

(11) **EP 1 240 414 B1**
(45) Veröffentlichungstag und Bekanntmachung des Hinweises auf die Patenterteilung: **08.10.2008**
(21) Anmeldenummer: 00989839.6
(22) Anmeldetag: 08.12.2000
(51) Int. Cl.: F01K 23/06, F01K 7/16

(54) **VERFAHREN ZUM BETREIBEN EINER DAMPFTURBINENANLAGE SOWIE DANACH ARBEITENDE DAMPFTURBINENANLAGE**
METHOD FOR OPERATING A STEAM TURBINE INSTALLATION AND A STEAM TURBINE INSTALLATION THAT FUNCTIONS ACCORDING THERETO
PROCEDE D'EXPLOITATION D'UNE INSTALLATION DE TURBINE A VAPEUR ET INSTALLATION DE TURBINE A VAPEUR FONCTIONNANT SELON LEDIT PROCEDE

(30) Priorität: 21.12.1999 DE 19961808
(43) Veröffentlichungstag der Anmeldung: 18.09.2002
(73) Patentinhaber: SIEMENS AKTIENGESELLSCHAFT, 80333 München (DE)
(72) Erfinder: NÖLSCHER, Christoph, 90419 Nürnberg (DE)
(86) Internationale Anmeldenummer: PCT/DE2000/004373
(87) Internationale Veröffentlichungsnummer: WO 2001/046566

(56) Entgegenhaltungen:
- EP-A- 0 017 657
- EP-A- 0 158 629
- AT-B- 395 635
- US-A- 4 845 942
- US-A- 5 987 874

## Beschreibung

Die Erfindung bezieht sich auf ein Verfahren zum Betreiben einer Dampfturbinenanlage, bei dem durch Verbrennung eines fossilen Brennstoffs erzeugtes Rauchgas im Wärmetausch mit einem im Wasser-Dampf-Kreislauf einer Dampfturbine strömenden Medium geführt wird. Sie bezieht sich weiter auf eine nach diesem Verfahren arbeitende Dampfturbinenanlage. Ein solches Verfahren bzw eine solche Anlage ist aus Dokument US-A-4 845 942 schon bekannt.

Bei zur Stromerzeugung eingesetzten Kraftwerksanlagen, bei denen als Primärenergieträger ein fossiler Brennstoff, insbesondere Kohle, eingesetzt wird, können verschiedene sogenannte Kombi-Prozesse Anwendung finden, denen der kombinierte Einsatz einer Gasturbinenanlage und einer Dampfturbinenanlage gemeinsam ist. So wird bei der sogenannten Kohledruckvergasung (Integrated Gasification Combined Cycle - IGCC) Kohle unter Zufuhr von in einer Luftzerlegungsanlage erzeugtem Sauerstoff vergast und das erzeugte Verbrennungsgas nach erfolgter Gasreinigung in einer Brennkammer verbrannt. Das bei der Verbrennung erzeugte heiße Rauchgas wird in einer Gasturbine bei einer Eintrittstemperatur von 1000°C bis 1400°C entspannt. Das arbeitsleistend entspannte und auf etwa 540°C abgekühlte Rauchgas wird in einem Abhitzedampferzeuger im Wärmetausch mit einem im Wasser-Dampf-Kreislauf einer Dampfturbine strömenden Medium in Form eines Wasser/Wasser-Dampf-Gemisches geführt. Der dabei erzeugte Frischdampf wird mit einer Eintrittstemperatur von etwa 540°C in der Dampfturbine arbeitsleistend entspannt.

Weitere Kombi-Prozesse sind die Druckwirbelschichtfeuerung (Pressurized Fluidized Bed Combustion - PFBC) und die Druckkohlenstaubfeuerung (Pressurized Pulverized Coal Combustion - PPCC), bei denen ebenfalls Kohle als Primärenergieträger verbrannt und das gereinigte Verbrennungsprodukt als heißes Rauchgas direkt der Gasturbine zugeführt wird. Auch wird bei diesen Kombi-Prozessen das in der Gasturbine arbeitsleistend entspannte und auf etwa 500°C bis 550°C abgekühlte Rauchgas in einem Abhitzedampferzeuger oder -wärmetauscher im Wärmetausch mit dem im Wasser-Dampf-Kreislauf der Dampfturbine strömenden Medium geführt. Der dabei erzeugte Wasserdampf wird entweder im Abhitzedampferzeuger selbst oder in der Verbrennungsanlage überhitzt und als Frischdampf wiederum der Dampfturbine zugeführt.

Ebenso wie in einer reinen fossil befeuerten Dampfturbinenanlage kondensiert auch bei dessen Kombi-Prozessen der in der Dampfturbine arbeitsleistend entspannte Dampf in einem der Dampfturbine nachgeschalteten Kondensator und wird als Speisewasser dem Wasser-Dampf-Kreislauf erneut zugeführt.

Zusätzlich zu diesen Kombi-Prozessen wird in dem Aufsatz "EFCC - Ein zukünftiges Konzept für Kohle-Kombi-Kraftwerk?", in VGB Kraftwerkstechnik 77 (1997), Heft 7, Seiten 537 bis 543, die sogenannte indirekte kohlebefeuerte Gasturbine (External Fired Combined Cycle - EFCC) beschrieben. Bei diesem Kombi-Prozess wird ein Hochtemperatur-Wärmetauscher eingesetzt, in dem durch Verbrennung von Kohle erzeugtes heißes Rauchgas im Wärmetausch mit verdichteter Luft geführt wird. Die dabei auf eine Temperatur bis etwa 1400°C erhitzte Luft wird der Gasturbine als Arbeitsmedium zugeführt. Das durch Wärmetausch mit der verdichteten Luft abgekühlte Rauchgas wird wiederum einem Abhitzedampferzeuger zugeführt. Im Anschluss an den dort stattfindenden Wärmetausch mit dem im Wasser-Dampf-Kreislauf einer Dampfturbine geführten Medium wird das abgekühlte Rauchgas in einer Entstickungs- und/oder Entschwefelungsanlage (DENOX-, REA-Anlage) gereinigt, bevor es über einen Kamin an die Umgebung abgegeben wird.

Das beim EFCC-Prozess in einer sogenannten Schmelzkammerfeuerung erzeugte heiße Rauchgas wird zunächst durch Ascheabscheidung gereinigt und anschließend dem Hochtemperatur-Wärmetauscher zugeführt. Dessen der hohen Rauchgastemperatur ausgesetzten Teile, beispielsweise von der verdichteten Luft durchströmte und vom heißen Rauchgas umströmte Rohrbündel, bestehen aus einem keramischen oder einem metallischen Material mit spezieller hochtemperaturbeständiger Legierung.

Mit diesem neuen Konzept verspricht man sich eine Steigerung des Anlagenwirkungsgrades gegenüber den Kombi-Prozessen mit Kohledruckvergasung (IGCC), mit Druckwirbelschichtfeuerung (PFBC) oder mit Druckkohlenstaubfeuerung (PPCC) auf 51% bis 53%. Nachteilig bei diesem Kombi-Prozess mit indirekt kohlebefeuerter Gasturbine (EFCC) ist jedoch, dass die als Arbeitsmedium für die Gasturbine dienende Luft mechanisch verdichtet werden muss. Die dazu erforderliche Verdichtungsenergie wird zwar zum Teil in der Gasturbine durch Entspannung wiederverwendet. Jedoch ist der Gesamtprozess verlustbehaftet, zumal die erforderliche mechanische Energie nur in ungünstiger Weise zur Stromerzeugung genutzt wird.

Der Erfindung liegt die Aufgabe zugrunde, ein Verfahren zum Betreiben einer Dampfturbinenanlage anzugeben, mit dem in einfacher Art und Weise ein möglichst hoher Anlagenwirkungsgrad durch eine möglichst hohe Eintrittstemperatur des Frischdampfes für die Dampfturbine erreicht wird. Des Weiteren soll eine besonders geeignete Dampfturbinenanlage zur Durchführung des Verfahrens angegeben werden.

Bezüglich des Verfahrens wird die Aufgabe erfindungsgemäß gelöst durch die Merkmale des Anspruchs 1. Dazu wird in einem Hochtemperatur-Wärmetauscher als Primärmedium das durch Verbrennung eines fossilen Brennstoffs erzeugte heiße Rauchgas zunächst im Wärmetausch mit im Wasser-Dampf-Kreislauf der Dampfturbine strömendem Wasserdampf als Sekundärmedium geführt. Der dabei auf eine Temperatur von vorzugsweise mehr als 800°C erhitzte Wasserdampf wird der Dampfturbine als Frischdampf zugeführt. Das im Hochtemperatur-Wärmetauscher abgekühlte Rauchgas wird anschließend in einem Abhitzedampferzeuger im Wärmetausch mit im Wasser-Dampf-Kreislauf strömendem Speisewasser zur Erzeugung des Wasserdampfes geführt.

Zwar ist es aus der DE 693 16 634 T2 bekannt, bei der Verbrennung von problematischen Brennstoffen, wie z. B. bei der Müllverbrennung, erzeugtes heißes Abgas unter Verwendung eines Hochtemperatur-Wärmetauschers zur Dampferzeugung zu nutzen. Allerdings sind dabei der Hochtemperatur-Wärmetauscher und ein Abhitzekessel abgasseitig parallel geschaltet und ein dampfseitig dem Abhitzekessel nachgeschalteter Überhitzer sowie der Hochtemperatur-Wärmetauscher sind in einem geschlossenen Kreis von z. B. Luft als zusätzlichem Energieträger durchströmt.

Die Erfindung geht dabei von der Überlegung aus, dass die im EFCC-Prozess erforderliche mechanische Verdichterenergie für die Stromerzeugung günstiger genutzt werden kann, wenn anstelle von Luft eine Flüssigkeit verdichtet und anschließend thermisch verdampft wird. Besonders günstig ist dabei die Erhitzung von Wasserdampf, der einem konventionellen Wasser-Dampf-Kreislauf einer Dampfturbine entnommen wird. Dieser Wasserdampf kann dann im Hochtemperatur-Wärmetauscher bis auf eine Temperatur von 1200°C bis 1400°C erhitzt und anschließend in einer gekühlten Hochtemperatur-Dampfturbine entspannt werden. Diese treibt dann einen Generator oder auch eine Speisewasserpumpe an.

Auf diese Weise kann die dem Hochtemperatur-Wärmetauscher entnommene Energie im Vergleich zum EFCC-Prozess exergetisch besser genutzt werden. Selbst bei gleichem Wirkungsgrad kann bei der Erhitzung von Wasserdampf für eine Dampfturbine eine kleinere Anlagenbaugröße bei gleicher mechanischer Nutzenergie erreicht werden als beim EFCC-Prozess. Grund hierfür ist, dass einerseits bei gleicher übertragener Hochtemperaturwärme der Brennstoffeinsatz im Vergleich zum EFCC-Prozess höher ist, da bei diesem üblicherweise die Gasturbinenabwärme der Verbrennung zugeführt wird. Andererseits kann der Hochtemperatur-Wärmetauscher gegenüber dem EFCC-Prozeß kleiner ausgelegt werden, da der Brennstoffeinsatz bei gleichem Wirkungsgrad für die gleiche mechanische Nutzenergie gleich sein muß. Die effizientere Nutzung der Hochtemperaturwärme durch die Dampfturbine ermöglicht zudem bei gleicher elektrischer Leistung eine Verringerung des konventionellen Dampfteils gegenüber dem EFCC-Prozess. Außerdem entfällt der bei diesem erforderliche Luftverdichter.

Zur Beherrschung der hohen Frischdampftemperaturen von größer oder gleich 800°C wird die Dampfturbine zweckmäßigerweise gekühlt. Dazu wird vorteilhafterweise dem Wasser-Dampf-Kreislauf entnommener Wasserdampf verwendet.

In einer vorteilhaften Ausführung wird der im Abhitzedampferzeuger produzierte Wasserdampf zunächst in einer (konventionellen) separaten Dampfturbine arbeitsleistend entspannt, bevor dieser entspannte wasserdampf im Hochtemperatur-Wärmetauscher auf die Frischdampftemperatur der diesem dampfseitig nachgeschalteten Dampfturbine erhitzt wird. Die beiden Dampfturbinen können dabei auf einer gemeinsamen Welle mit einem Generator sitzen (Einwellenausführung) und auf einen gemeinsamen Kondensator arbeiten, der innerhalb des Wasser-Dampf-Kreislaufs den Heizflächen des Abhitzedampferzeugers vorgeschaltet ist. Die dem Hochtemperatur-Wärmetauscher dampfseitig nachgeschaltete Dampfturbine bildet dann quasi den Hochtemperatur-Teil der dem Hochtemperatur-Wärmetauscher dampfseitig vorgeschalteten Dampfturbine.

Bezüglich der Dampfturbinenanlage wird die Aufgabe erfindungsgemäß gelöst durch die Merkmale des Anspruchs 5. Vorteilhafte Ausgestaltungen sind Gegenstand der auf diesen rückbezogenen Unteransprüche.

Ein dem Abhitzedampferzeuger rauchgasseitig vorgeschalteter und dampfseitig nachgeschalteter Hochtemperatur-Wärmetauscher mit aus beispielsweise keramischem Werkstoff bestehenden Wärmetauscher-Heizflächen ist dampfseitig einer vorzugsweise dampfgekühlten Hochtemperatur-Dampfturbine vorgeschaltet. Zur Kühlung der Dampfturbine ist an diese eine Kühldampfleitung geführt, über die dem Wasser-Dampf-Kreislauf entnommener Wasserdampf der Dampfturbine als Kühldampf zuführbar ist. Die Kühldampfleitung ist dabei zweckmäßigerweise an eine den Hochtemperatur-Wärmetauscher mit dem Abhitzedampferzeuger verbindende Dampfleitung angeschlossen. Die Kühldampfleitung ist bei der Ausführung mit einer separaten Dampfturbine die zweckmäßigerweise an eine diese mit dem Hochtemperatur-Wärmetauscher verbindende Dampfleitung angeschlossen, über die auch der zu erhitzende oder zu überhitzende Wasserdampf geführt ist.

Nachfolgend werden Ausführungsbeispiele der Erfindung anhand einer Zeichnung näher erläutert. Darin zeigen:
- FIG 1: schematisch eine Dampfturbinenanlage mit einem Hochtemperatur-Wärmetauscher zur Frischdampferzeugung für eine gekühlte Hochtemperatur-Dampfturbine, und
- FIG 2: in einer Darstellung gemäß FIG 1 eine Dampfturbinenanlage mit zwei Dampfturbinen in Einwellenausführung.

Einander entsprechende Teile sind in beiden Figuren mit den gleichen Bezugszeichen versehen.

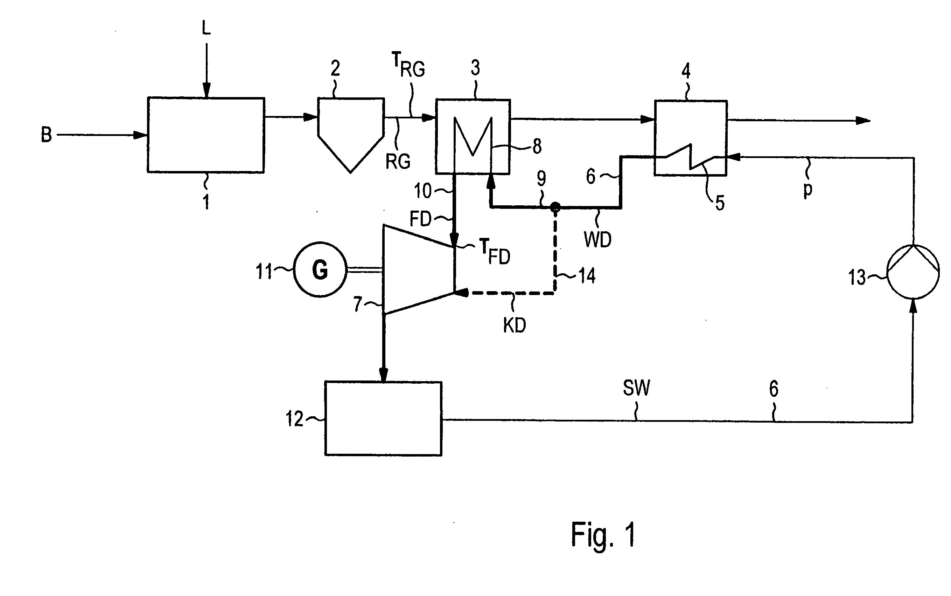

Die in FIG 1 dargestellte Dampfturbinenanlage umfasst eine Verbrennungsanlage 1 in Form beispielsweise einer atmosphärischen Staubfeuerung mit flüssigem Ascheabzug in einem Abscheider 2 (Schmelzkammerfeuerung) sowie einen Hochtemperatur-Wärmetauscher 3 und einen diesem rauchgasseitig nachgeschalteten Abhitzedampferzeuger 4. Dessen Heizflächen 5 sind in den Wasser-Dampf-Kreislauf 6 einer Dampfturbine 7 geschaltet. Der Hochtemperatur-Wärmetauscher 3 ist dampfseitig dem Abhitzedampferzeuger 4 nachgeschaltet und der Dampfturbine 7 vorgeschaltet. Dazu sind beispielsweise aus keramischem Material oder aus einem hochtemperaturbeständigen Metall spezieller Legierung, z.B. einer Oxide-Dispersion-Strengthened-(ODS-)Legierung, bestehende Heizflächen 8 des Hochtemperatur-Wärmetauschers 3 stromab über eine Dampfleitung 9 mit den Heizflächen 5 des Abhitzedampferzeugers 4 und stromauf über eine Hochtemperatur-Dampfleitung 10 mit der Dampfturbine 7 verbunden.

Beim Betrieb der Dampfturbinenanlage wird Brennstoff B, insbesondere Kohle, in der Verbrennungsanlage 1 unter Zufuhr von Luft L verbrannt. Das dabei erzeugte heiße Verbrennungsprodukt wird im Anschluss an eine Reinigung im Ascheabscheider 2 dem Hochtemperatur-Wärmetauscher 3 primärseitig als Rauchgas RG mit einer Rauchgastemperatur T_{RG} von z.B. 800°C bis 1400°C zugeführt. Im Hochtemperatur-Wärmetauscher 3 erfolgt ein Wärmetausch des heißen Rauchgas RG mit sekundärseitig über dessen Heizflächen 8 geführtem Wasserdampf WD. Der dabei erhitzte Wasserdampf wird der Dampfturbine 7 als Frischdampf FD mit einer Frischdampf- oder Eintrittstemperatur T_{FD} größer oder gleich 800°C zugeführt. Die Dampfturbine 7, in der der Frischdampf FD arbeitsleistend entspannt wird, treibt dabei einen Generator 11 zur Stromerzeugung an.

Der in der Dampfturbine 7 arbeitsleistend entspannte Frischdampf FD wird in einem der Dampfturbine 7 nachgeschalteten Kondensator 12 kondensiert. Das dabei entstehende Kondensat oder Speisewasser SW wird über eine Speisewasserpumpe 13 den Heizflächen 5 des Abhitzedampferzeugers 4 in Form beispielsweise eines Vorwärmers und eines diesem nachgeschalteten Verdampfers zugeführt. Der im Abhitzedampferzeuger 4 erzeugte Wasserdampf WD wird dem Hochtemperatur-Wärmetauscher 3 dampfseitig über die Dampfleitung 9 zugeführt.

Die Dampfturbine 7 wird mittels Kühldampf KD gekühlt und ist somit vorzugsweise als Hochtemperatur-Dampfturbine ausgeführt. Der Kühldampf KD wird im Ausführungsbeispiel dem Wasser-Dampf-Kreislauf 6 aus der Dampfleitung 9 entnommen. Dazu ist eine Kühldampfleitung 14 an die den Hochtemperatur-Wärmetauscher 3 mit dem Abhitzedampferzeuger 4 verbindende Dampfleitung 9 angeschlossen.

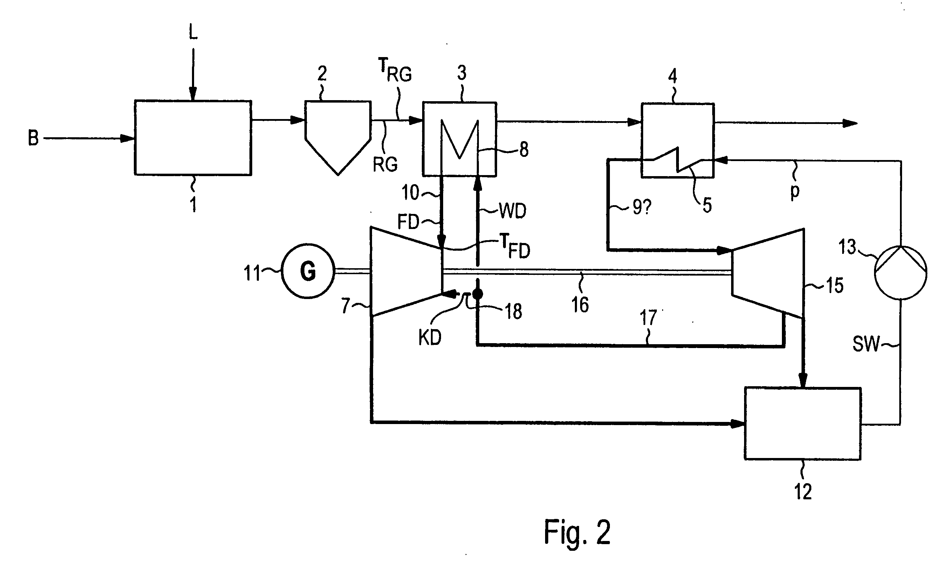

Beim Ausführungsbeispiel gemäß FIG 2 umfasst die Dampfturbinenanlage zusätzlich zur Hochtemperatur-Dampfturbine 7 eine weitere Dampfturbine 15, die über eine gemeinsame Welle 16 (single shaft) den Generator 11 antreiben. Die Erzeugung des heißen Rauchgases RG erfolgt analog zum Ausführungsbeispiel gemäß FIG 1. Dabei wird wiederum im Hochtemperatur-Wärmetauscher 3 das heiße Rauchgas RG im Wärmetausch mit Wasserdampf WD geführt, der hier der weiteren Dampfturbine 15 entnommen ist. Dazu ist die Dampfturbine 15 dampfseitig zwischen den Abhitzedampferzeuger 4 und den Hochtemperatur-Wärmetauscher 3 geschaltet. Die weitere Dampfturbine 15 ist wiederum abdampfseitig mit dem Kondensator 12 verbunden, in den auch die Hochtemperatur-Dampfturbine 7 abdampfseitig mündet.

Beim Ausführungsbeispiel gemäß FIG 2 ist somit der eigentliche Hochtemperatur-Teil der separaten Dampfturbine 15 in Form der Hochtemperatur-Dampfturbine 7 ausgeführt, während dieser Hochtemperatur-Teil im Ausführungsbeispiel gemäß FIG 1 in die Dampfturbine 7 integriert ist. Bei der Dampfturbinenanlage gemäß FIG 2 wird die als Hochtemperatur-Teil arbeitende Dampfturbine 7 wiederum mittels Kühldampf KD gekühlt. Dieser wird einer die weitere oder separate Dampfturbine 15 mit den Heizflächen 8 des Hochtemperatur-Wärmetauschers 3 verbindenden Dampfleitung 17 entnommen und über eine an diese angeschlossene Kühldampfleitung 18 zur Hochtemperatur-Dampfturbine 7 geführt.

Der Betriebsdruck der Dampfturbinenanlage 1 ist praktisch durch die Festigkeit des Hochtemperatur-Wärmetauschers auf etwa 15bar bis 30bar bei einer Betriebstemperatur von 1400°C begrenzt. Der Betriebsdruck p im Wasser-Dampf-Kreislauf 6 ist mit 30bar somit im Vergleich zu einem konventionellen Wasser-Dampf-Kreislauf mit ca. 250bar vergleichsweise gering. Der Betriebsdruck kann bei einer Betriebstemperatur von 1000°C auf 150bar erhöht werden.

## Patentansprüche

1. Verfahren zum Betreiben einer Dampfturbinenanlage, bei dem durch Verbrennung eines fossilen Brennstoffs (B) erzeugtes Rauchgas (RG) im Wärmetausch mit einem im Wasser-Dampf-Kreislauf (6) einer Dampfturbine (7) strömenden Medium (SW,WD) geführt wird, **dadurch gekennzeichnet,**
- **dass** das heiße Rauchgas (RG) zunächst einem Hochtemperatur-Wärmetauscher (3) primärseitig zugeführt und dort im Wärmetausch mit diesem sekundärseitig zugeführten und im Wasser-Dampf-Kreislauf (6) strömendem Wasserdampf (WD) geführt wird, wobei der dabei erhitzte Wasserdampf der Dampfturbine (7) als Frischdampf (FD) zugeführt wird, und
- **dass** anschließend das im Hochtemperatur-Wärmetauscher (3) abgekühlte Rauchgas (RG) in einem Abhitzedampferzeuger (4) im Wärmetausch mit im Wasser-Dampf-Kreislauf (6) strömendem Speisewasser (SW) geführt und dabei der wasserdampf (WD) erzeugt wird.

2. Verfahren nach Anspruch 1, bei dem der Wasserdampf (WD) im Hochtemperatur-Wärmetauscher (3) auf eine Frischdampftemperatur (T_{FD}) größer oder gleich 800°C erhitzt wird.

3. Verfahren nach Anspruch 1 oder 2, bei dem die Dampfturbine (7) mit dem Wasser-Dampf-Kreislauf (6) entnommenem Wasser-dampf (WD) gekühlt wird.

4. Verfahren nach einem der Ansprüche 1 bis 3, bei dem der im Abhitzedampferzeuger (4) erzeugte Wasserdampf (WD) einer separaten Dampfturbine (15) zugeführt und der dort arbeitsleistend entspannte Wasserdampf (WD) dem Hochtemperatur-Wärmetauscher (3) zugeführt wird.

5. Dampfturbinenanlage mit einer Verbrennungsanlage (1) für einen fossilen Brennstoff (B) zur Erzeugung von Rauchgas (RG), **dadurch gekennzeichnet,**
- **dass** das Rauchgas (RG) in einem Hochtemperatur-Wärmetauscher (3) und in einem diesem rauchgasseitig nachgeschalteten Abhitzedampferzeuger (4) mit einem im Wasser-Dampf-Kreislauf (6) einer Dampfturbine (7) strömenden Medium (SW,WD) im Wärmetausch geführt ist, wobei in dem Abhitzedampferzeuger (4) das Rauchgas im Wärmetausch mit im Wasser-Dampf-Kreislauf strömenden Speisewasser steht und dabei Wasserdampf erzeugt wird, und
- **dass** der Hochtemperatur-Wärmetauscher (3) dampfseitig zwischen den Abhitzedampferzeuger (4) und die Dampfturbine (7) geschaltet ist.

6. Dampfturbinenanlage nach Anspruch 5, **dadurch gekennzeichnet, dass** die Dampfturbine (7) mit einer Kühldampfleitung (14, 18) verbunden ist, über die dem Wasser-Dampf-Kreislauf (6) entnommener Wasserdampf (WD) der Dampfturbine (7) als Kühldampf (KD) zuführbar ist.

7. Dampfturbinenanlage nach Anspruch 6, **dadurch gekennzeichnet, dass** die Kühldampfleitung (14) an eine den Hochtemperatur-Wärmetauscher (3) mit dem Abhitzedampferzeuger (4) verbindende Dampfleitung (9) angeschlossen ist.

8. Dampfturbinenanlage nach einem der Ansprüche 5 bis 7, **gekennzeichnet durch** eine dampfseitig zwischen den Abhitzedampferzeuger (4) und den Hochtemperatur-Warmetauscher (3) geschaltete separate Dampfturbine (15).

9. Dampfturbinenanlage nach Anspruch 8, **gekennzeichnet durch** eine die separate Dampfturbine (15) mit Heizflächen (8) des Hochtemperatur-Wärmetauschers (3) verbindende Dampfleitung (17), an die eine Kühldampfleitung (18) zum Zuführen von Kühldampf (KD) an die dem Hochtemperatur-Wärmetauscher (3) dampfseitig nachgeschaltete Dampfturbine (7) angeschlossen ist.

10. Dampfturbinenanlage nach einem der Ansprüche 5 bis 9, **dadurch gekennzeichnet, dass** der Verbrennungsanlage (1) ein Ascheabscheider (2) nachgeschaltet ist.

## Claims

1. Method of operating a steam turbine installation, in which method combustion gas (RG) generated by combustion of a fossil fuel (B) is guided so as to exchange heat with a medium (SW, WD) flowing in the water/steam cycle (6) of a steam turbine (7), **characterized**
- **in that** the hot combustion gas (RG) is first of all supplied to the primary side of a high-temperature heat exchanger (3), and is guided there with heat being exchanged with steam (WD), which is supplied to the secondary side of the heat exchanger (3) and flows in the water/steam cycle (6), with the steam that has been heated in this process being supplied as fresh steam (FD) to the steam turbine (7), and
- **in that** combustion gas (RG) cooled in the high-temperature heat exchanger (3) is subsequently guided in a waste-heat steam generator (4) so as to exchange heat with feed water (SW) flowing in the water/steam cycle (6), the steam (WD) being generated by this means.

2. Method according to Claim 1, in which the steam (WD) is heated in the high-temperature heat exchanger (3) to a live steam temperature (T_{FD}) greater than or equal to 800°C.

3. Method according to Claim 1 or 2, in which the steam turbine (7) is cooled by the steam (WD) extracted from the water/steam cycle (6).

4. Method according to one of Claims 1 to 3, in which the steam (WD) generated in the waste-heat steam generator (4) is supplied to a separate steam turbine (15) and the steam (WD) expanded there - with work output - is supplied to the high-temperature heat exchanger (3).

5. Steam turbine installation having a combustion installation (1) for a fossil fuel (B) for the generation of combustion gas (RG), **characterized**
- **in that** the combustion gas (RG) is guided, with heat being exchanged, with a medium (SW, WD) flowing in the water/steam cycle (6) of a steam turbine (7), in a high-temperature heat exchanger (3) and in a waste-heat steam generator (4) which is connected downstream therefrom on the combustion gas side, with the combustion gas being produced in the waste-heat steam generator (4), with heat being exchanged with feed water flowing in the water/steam cycle, and with steam being produced in the process, and
- **in that** the high-temperature heat exchanger (3) is connected on the steam side between the waste-heat steam generator (4) and the steam turbine (7).

6. Steam turbine installation according to Claim 5, **characterized in that** the steam turbine (7) is connected to a cooling steam line (14, 18) by means of which the steam (WD) extracted from the water/steam cycle (6) can be supplied to the steam turbine (7) as cooling steam (KD).

7. Steam turbine installation according to Claim 6, **characterized in that** the cooling steam line (14) is connected to a steam line (9) connecting the high-temperature heat exchanger (3) to the waste-heat steam generator (4).

8. Steam turbine installation according to one of Claims 5 to 7, **characterized by** a separate steam turbine (15) connected on the steam side between the waste-heat steam generator (4) and the high-temperature heat exchanger (3).

9. Steam turbine installation according to Claim 8, **characterized by** a steam line (17) connecting the separate steam turbine (15) with heating surfaces (8) of the high-temperature heat exchanger (3), to which steam line (17) is connected a cooling steam line (18) for supplying cooling steam (KD) to the steam turbine (7) connected downstream of the high-temperature heat exchanger (3) on the steam side.

10. Steam turbine installation according to one of Claims 5 to 9, **characterized in that** an ash separator (2) is connected downstream of the combustion installation (1).

## Revendications

1. Procédé pour faire fonctionner une installation de turbine à vapeur, dans lequel on conduit du gaz ( RG ) de fumée en échange de chaleur avec un milieu ( SW, WD ) passant dans un circuit ( 6 ) eau-vapeur d'une turbine ( 7 ) à vapeur,
**caractérisé en ce que**
- on envoie du côté primaire le gaz ( RG ) de fumée chaud d'abord à un échangeur de chaleur ( 3 ) à haute température et on l'y fait passer en échange de chaleur avec cette vapeur ( WD ) d'eau apportée du côté secondaire et passant dans le circuit ( 6 ) eau-vapeur, la vapeur d'eau ainsi chauffée de la turbine ( 7 ) à vapeur étant apportée en tant que vapeur ( FD ) fraîche et
- **en ce qu'**ensuite on fait passer le gaz ( RG ) de fumée, refroidi dans l'échangeur de chaleur ( 3 ) à haute température, dans un générateur ( 4 ) de vapeur à récupération de la chaleur perdue en échange de chaleur avec de l'eau ( SW ) d'alimentation passant dans le circuit ( 6 ) eau-vapeur et on produit ainsi la vapeur ( WD ) d'eau.

2. Procédé suivant la revendication 1, dans lequel on chauffe la vapeur ( WD ) d'eau dans l'échangeur ( 3 ) de chaleur à haute température à une température ( TFD ) de vapeur fraîche supérieure ou égale à 800°C.

3. Procédé suivant la revendication 1 ou 2, dans lequel on refroidit la turbine ( 7 ) à vapeur par de la vapeur ( WD ) d'eau prélevée du circuit ( 6 ) eau-vapeur.

4. Procédé suivant l'une des revendications 1 à 3, dans lequel on apporte la vapeur ( WD ) d'eau produite dans le générateur ( 4 ) de vapeur à récupération de la chaleur perdue à une turbine ( 15 ) à vapeur distincte et on apporte la vapeur ( WD ) d'eau, qui y est détendue en fournissant du travail, à l'échangeur de chaleur ( 3 ) à haute température.

5. Installation de turbine à vapeur comprenant une installation ( 1 ) de combustion d'un combustible ( B ) fossile pour produire du gaz ( RG ) de fumée, **caractérisée**
- **en ce que** l'on fait passer le gaz ( RG ) de fumée dans un échangeur de chaleur ( 3 ) à haute température et dans un générateur ( 4 ) de vapeur à récupération de la chaleur perdue, monté en aval de celui-ci du côté du gaz de fumée, en échange de chaleur avec un milieu ( SW, WD ) passant dans un circuit ( 6 ) eau-vapeur d'une turbine ( 7 ) à vapeur, en produisant, dans le générateur ( 4 ) de vapeur à récupération de la chaleur perdue, le gaz de fumée en échange de chaleur avec de l'eau d'alimentation passant dans le circuit eau-vapeur et en produisant ainsi de la vapeur d'eau et
- **en ce que** l'échangeur de chaleur ( 3 ) à haute température est monté du côté de la vapeur entre le générateur ( 4 ) de vapeur à récupération de la chaleur perdue et la turbine ( 7 ) à vapeur.

6. Installation de turbine à vapeur suivant la revendication 5, **caractérisée en ce que** la turbine ( 7 ) à vapeur communique avec un conduit ( 14, 18 ) de vapeur de refroidissement, par lequel de la vapeur ( WD ) d'eau prélevée du circuit ( 6 ) eau-vapeur peut être envoyée à la turbine ( 7 ) à vapeur en tant que vapeur ( KD ) de refroidissement.

7. Installation de turbine à vapeur suivant la revendication 5, **caractérisée en ce que** le conduit ( 14 ) de vapeur de refroidissement est raccordé à un conduit ( 9 ) pour de la vapeur mettant en communication l'échangeur de chaleur ( 3 ) à haute température et le générateur ( 4 ) de vapeur à récupération de la chaleur perdue.

8. Installation de turbine à vapeur suivant l'une des revendications 5 à 7, **caractérisée par** une turbine ( 15 ) à vapeur distincte montée du côté de la vapeur entre le générateur ( 4 ) de vapeur à récupération de la chaleur perdue et l'échangeur de chaleur ( 3 ) à haute température.

9. Installation de turbine à vapeur suivant la revendication 8, **caractérisée par** un conduit ( 17 ) pour de la vapeur mettant en communication la turbine ( 15 ) à vapeur distincte avec des surfaces ( 8 ) de chauffe de l'échangeur de chaleur ( 3 ) à haute température, conduit auquel est raccordé un conduit ( 18 ) de vapeur de refroidissement pour apporter de la vapeur ( KD ) de refroidissement à la turbine ( 7 ) à vapeur, montée en aval du côté de la vapeur, de l'échangeur de chaleur ( 3 ) à haute température.

10. Installation de turbine à vapeur suivant l'une des revendications 5 à 9, **caractérisée en ce qu'**un séparateur ( 2 ) de cendres est monté en aval de l'installation ( 1 ) de combustion.
